# EUROPEAN PATENT SPECIFICATION

(11) **EP 3 493 475 B1**
(45) Date of publication and mention of the grant of the patent: **10.03.2021**
(21) Application number: 18214331.3
(22) Date of filing: 23.12.2015
(51) Int. Cl.: H04L 12/24

(54) **DISTRIBUTED DATABASE FOR NETWORK FUNCTIONS**
VERTEILTE DATENBANK FÜR NETZWERKFUNKTIONEN
BASE DE DONNÉES DISTRIBUÉE POUR DES FONCTIONS DE RÉSEAU

(43) Date of publication of application: 05.06.2019
(62) Divisional of application: 15202390.9
(73) Proprietor: Huawei Technologies Co., Ltd., Longgang District Shenzhen, Guangdong 518129 (CN)
(72) Inventor: BRONSTEIN, Zvika, 80992 Munich (DE); AVITZUR, Aharon, 80992 Munich (DE); ROCH, Evelyne, 80992 Munich (DE)
(74) Representative: Kreuz, Georg Maria

(56) References cited:
- US-A1- 2003 172 046
- US-A1- 2011 125 810
- US-B1- 8 284 699
- PANKAJ BERDE ET AL: "ONOS", HOT TOPICS IN SOFTWARE DEFINED NETWORKING, ACM, 2 PENN PLAZA, SUITE 701 NEW YORK NY 10121-0701 USA, 22 August 2014 (2014-08-22), pages 1-6, XP058053589, DOI: 10.1145/2620728.2620744 ISBN: 978-1-4503-2989-7
- PFAFF B DAVIE B ET AL: "The Open vSwitch Database Management Protocol; rfc7047.txt", THE OPEN VSWITCH DATABASE MANAGEMENT PROTOCOL; RFC7047.TXT, INTERNET ENGINEERING TASK FORCE, IETF; STANDARD, INTERNET SOCIETY (ISOC) 4, RUE DES FALAISES CH- 1205 GENEVA, SWITZERLAND, 17 December 2013 (2013-12-17), pages 1-35, XP015096692,

## Description

### BACKGROUND

The present invention, in some embodiments thereof, relates to managing communication between network elements, and, more specifically, but not exclusively, to managing communication between virtual network elements in a network with network function virtualization.

In the field of network architecture there is a move towards abstracting elements of the network equipment and software. Network Function Virtualization (NFV) and Software Defined Networking (SDN) are examples of this network architecture approach.

NFV separates network functions (NFs) from specialized hardware and puts software on commercial off-the-shelf (COTS) equipment. Network Functions include physical network functions (PNFs), virtual network functions (VNFs) and other functions like Open vSwitch (OVS). Multiple protocols (e.g. OpenFlow, SNMP, FORCES, etc.) are used to exchange information between controllers and network elements.

SDN allows network administrators to manage network services through abstraction of higher-level functionality. This is done by decoupling data and control planes, with a centralization of the control plane.

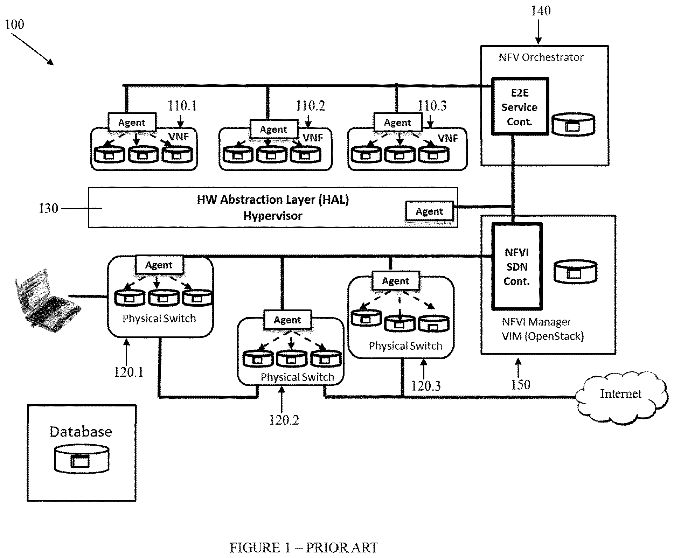

Reference is now made to Fig. 1, which shows a prior art NFV/SDN network. Each controller (e.g. NFV Orchestrator 140 and NFVI Manager 150) has access to its own database (DB) with a specific DB schema. Similarly, each NF (e.g. VNFs 110.1-110.3 and physical switches 120.1-120.3) has its own DB schema and DB access implementation. An agent in each network element converts the DB schema to protocols which can pass data to network elements having different DB schemas.

One problem with such network architecture approaches such as NFV and SDN is that many data representations and proprietary or standard protocols are used to exchange information between network controllers and network elements (physical or virtual). In this environment, standardization of new protocols is complex and time consuming. Controlling network elements is too complex and requires a long time to develop and implement.

Open Network Operating System (ONOS), as disclosed in "ONOS: Toward an Open, Distributed SDN OS" by Pankaj Berde et al, is a database-based network architecture which implements a logically centralized network graph. Control applications make use of this graph using a standard blueprints graph API which allow the applications to annotate the graph. The application annotations are picked up by OpenFlow Manager to program the switches using OpenFlow. However this architecture is incompatible with existing network solutions, and is also incompatible with architectures such as NFV and SDN.

Systems built according to the Open vSwitch Database Management Protocol (OVSDB), which is defined in IETF RFC 7047 titled "The Open vSwitch Database Management Protocol", are very limited and address the virtualization layer only. However, to apply OVSDB to NFV requires extensive standardization to define control functions, hardware needs to be abstracted from running software and synchronization between VNFs is challenging.

US 8284699 B1 discloses methods, systems, and apparatuses for managing network devices including computer programs encoded on a computer storage medium, for configuring network devices. A central management system stores shared configuration objects in a central configuration database. A network device stores shared configuration objects and device-specific configuration objects in a local configuration database. The shared configuration objects in the local configuration database correspond to shared configuration objects in the central configuration database. The central management system determines the network device has received a request to update a shared configuration object, where the request did not originate from the central management system, and updates the central configuration database.

US 2011/0125810 A1 discloses a method for operating a network using relational database methodology, which involves modeling network elements, such as router configurations and link information, as well as any generic network status, as data in a relational database. Various network data, such as router states and link states, are abstracted into tables in the relational database. Network management operations may then be represented as a series of transactional database queries and insertions. As a result, the database automatically propagates, to the appropriate network elements, state changes that are written to database tables, thereby implementing various network operations. Tables in the database can be constructed at various levels of abstraction, as required to satisfy network operational demands. Programmability is provided by a declarative language composed of a series of database queries and insertions.

US 2003/0172046 A1 discloses a method and system for managing devices via a database application programming interface. The system receives a request for a database operation, and maps the request to at least one command for a non-database operation. The system may execute the at least one command by making a system call via a device API, or by making a remote procedure call to a device.

### SUMMARY

Aspects of the present invention use a common DB schema and a DB Management System (DBMS) to allow network functions (physical and virtual) to uniformly access data stored in storage units of local and remote network nodes. Each network controller and/or virtual network function (VNF) and/or physical network function (PNF) has a local storage with uniformly accessed data. A DBMS ensures that the data is synchronized and consistent between all network elements. Thus network controllers and NFs are thus able to access and/or manipulate the data directly, without knowledge of the specific data representation or protocol used by the other network elements. Types of data which may be stored on the network node in a storage unit include: topology, forwarding rules, user records, status and statistics.

According to a first aspect of the present invention there is provided a method of managing communication between network nodes according to claim 1. According to a second aspect of the present invention, there is provided a computer program product according to claim 13. According to a third aspect of the present invention, there is provided a network function database (NFDB) -based network according to claim 14. Preferred embodiments are subject matter of the dependent claims.

Unless otherwise defined, all technical and/or scientific terms used herein have the same meaning as commonly understood by one of ordinary skill in the art to which the invention pertains. Although methods and materials similar or equivalent to those described herein can be used in the practice or testing of implementation forms of the invention, exemplary methods and/or materials are described below. In case of conflict, the patent specification, including definitions, will control. In addition, the materials, methods, and examples are illustrative only and are not intended to be necessarily limiting.

### BRIEF DESCRIPTION OF THE DRAWINGS

Some implementation forms of the invention are herein described, by way of example only, with reference to the accompanying drawings. With specific reference now to the drawings in detail, it is stressed that the particulars shown are by way of example and for purposes of illustrative discussion of implementation forms of the invention. In this regard, the description taken with the drawings makes apparent to those skilled in the art how implementation forms of the invention may be practiced.

In the drawings:
FIG. 1 shows a prior art NFV/SDN network;
FIG. 2 is a simplified block diagram of a network node apparatus, according to implementation forms of this invention;
FIG. 3 is a simplified diagram of a network function database (NFDB)-based network, according to implementation forms of the invention;
FIG. 4A is a simplified diagram of an NFDB-based network, according to exemplary implementation forms of the invention;
Fig. 4B is a simplified block diagram illustrating NFDB-based data forwarding management, according to exemplary implementation forms of the invention;
FIGS. 5A and 5B are simplified block diagrams of an NFDB distributed cache, according to respective exemplary implementation forms of the invention;
FIG. 6 is a simplified block diagram of a network node, according to exemplary implementation forms of the invention;
FIG. 7 is a simplified flowchart of a method of managing communication between network nodes, according to implementation forms of the invention;
FIG. 8 is a simplified block diagram illustrating network function control in an NFDB-based network, according to exemplary implementation forms of the invention; and
FIG. 9 shows an example of NFDB interaction with an ODL SDN controller.

### DETAILED DESCRIPTION

The present invention, in some implementation forms thereof, relates to managing communication between network elements, and, more specifically, but not exclusively, to managing communication between virtual network elements in a network with network function virtualization.

Current approaches to SDN and NFV are based on each network controller, network element (e.g. an SDN-enabled switch) and network function having its own database (DB). Multiple protocols are used to exchange information between the network controllers and the switches/network functions.

Existing networking solutions typically require sequential definition implementation and deployments of network functions, and of controllers and standard protocols for exchanging information between them. These sequences often take years of effort to define and update, leading to deployment delays and interoperability challenges.

The NFDB-based networking described herein allows for deployment of network functions and controllers before their complete DB schema is complete. A common DBMS is implemented in each network element along with a common access schema to data stored in all network elements, making the usage of a designated network protocol redundant. The definition and customization of new data elements may be completed easily at a later stage.

With NFDB, network nodes include respective local storage units which store data used for the device's local network function. All the storage units use the same DB schema. A DBMS directory indexes the data elements in all the storage units in the network nodes, so that a network node may locate, update and/or read data stored in storage units in other network nodes. The network node performs local network functions by applying rules (denoted local function execution instructions) to data in its local storage unit. The network node may pass data to and/or control the function of a remote network node by writing data into the storage unit of the remote node (also denoted herein a remote node storage unit) using remote function execution instructions which define how remote network node functioning is controlled.

NFDB-based networking enables efficient network control and management. Data routing tables, network topologies, states and statistics may be maintained and collected simply by accessing node storage units, and reading and/or writing data to the storage units with a uniform protocol used by all of the network nodes.

NFDB-based networking is also of interest in the rapidly growing field of the Internet of Things (IoT). The IoT connects objects embedded with electronics, software, sensors and the like, enabling these objects to collect and exchange data. Given the wide variety of hardware and software components which may be incorporated into the IoT, it is extremely important that the network be easily adapted to support interaction amongst objects using many different protocols. Using the NFDB approach, each object is designed using a single, known DB schema using the same access protocols and APIs. Thus objects in an IoT may immediately interact with any new object that is added to the IoT by identifying the new object using the DBMS directory and accessing the object's storage unit using the common access schema. Examples of IoT applications of the NFDB are given below.

As used herein the term "network node" means any network element (whether virtual or physical) operating in and communicating over the network.

As used herein the terms "network function" and "NF" encompass both virtual network functions and physical network functions).

Before explaining at least one aspect of the invention in detail, it is to be understood that the invention is not necessarily limited in its application to the details of construction and the arrangement of the components and/or methods set forth in the following description and/or illustrated in the drawings and/or the Examples. The invention is capable of other implementation forms or of being practiced or carried out in various ways.

The present invention may be a system, a method, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present invention may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some implementation forms, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to 9 illustrations and/or block diagrams of methods, apparatus (systems), and computer program products according to implementation forms of the invention. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various implementation forms of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

### Network Node

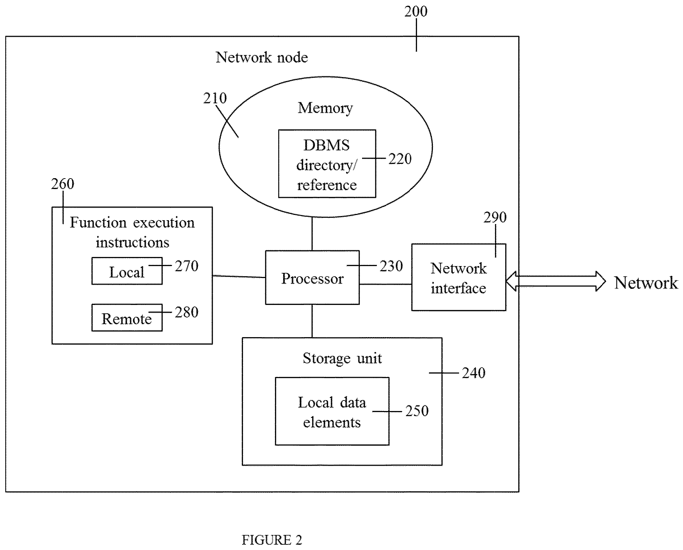

Reference is now made to Fig. 2, which is a simplified block diagram of a network node apparatus, according to implementation forms of this invention.

Network node 200 includes memory 210, processor 230 and a physical storage unit 240. Network node 200 executes a local network function and is also capable of accessing data stored in one or more remote network nodes, based respectively on local and remote function execution instructions (270 and 280).

Memory 210 stores a copy of and/or reference to a DBMS directory. For clarity, in the description of implementation forms of the invention, the term DBMS directory means a copy of and/or reference to a DBMS directory, and encompasses cases where memory 210 stores a reference to the DBMS directory and/or stores all or a portion of the DBMS directory. Optionally, memory 210 also stores other information specific to the network node itself, for example logic rules for node functionality, monitoring logs and/or statistical information.

DBMS directory 220 indexes local data elements 250 which are stored in storage unit 240 and data elements which are stored in storage units of remote network nodes (also denoted herein "remote storage units"). A single access schema is used for local storage unit 240 and the remote network node storage units. For example, the same APIs may be used to load, query, update and otherwise manipulate data stored in remote and local storage units.

Processor 230 uses the DBMS directory to identify local data elements stored in storage unit 240 and also remote data elements stored in physical storage units and in remote storage units. Optionally, processor 230 identifies pointers to at least some of the data elements using the DBMS directory, and reads and/or writes data from the data elements using the pointers.

Processor 230 updates data in local and remote storage units, in accordance with respective function execution instructions 260. Optionally, the function execution instructions indicate which data elements should be updated in order to perform the desired network functions, as well as the values which should be written and/or read.

Processor 230 updates data element(s) in storage unit 240 according to local network function execution instructions 270. The local network function execution instructions 270 cause the local network function to be executed by a component of the network node apparatus. Optionally, network node 200 includes logic, for example stateless business logic, which executes the local network function based on the data stored in storage unit 240.

The DBMS maintains a directory indexing data elements in all of the storage units in the network nodes. To execute a remote network function, processor 230 instructs the network node to manipulate data, indexed by the DBMS directory, in the storage unit of a remote node. The remote node performs its respective network function based on the data stored in the remote node storage unit. Thus changing the data in the remote storage unit affects the operation of the remote network node.

The DBMS synchronizes data between the storage units, and, optionally, server and/or server instances. Data synchronization may be maintained by any means known in the art. Optionally, the DBMS manages the storage units of multiple network nodes as a distributed cache, as described below.

Optionally, the DBMS preloads network node storage units with specified data upon startup and/or when a network node connects to the network.

Optionally, the DBMS includes other database management functions, such as recovery from DB server failure without losing data or performance, which are implemented by any means known in the art.

Optionally, communication in the network uses a multi-layer model (e.g. OSI) and the local network function and the remote network function are messages on different layers. The DBMS may be used to distribute network topology, network forwarding rules, user records, status and/or statistics between different local storage units accessed by network controllers at different layers, for example between the service layer network controller and the infrastructure layer network controller or between two infrastructure layer network controllers such as physical switch network controllers and overlay network controller.

Optionally, at least one of the local and remote function execution instructions are API calls. The API calls optionally include one or more of:
i. Pub/Sub API calls for registering changes and getting notifications upon data changes on at least one of the data elements;
ii. Structured Query Language (SQL) API calls for querying local and global information in at least some of the data elements; and
iii. Read/Write (Key-Value) API calls to update a state stored in at least one of the data elements as part of its business logic flow.

Optionally, at least one node in the NFDB-based network is a network-connected device, such as a sensor, a car, a household device, a camera and/or the like. Further optionally, the node's network function is for inducing a network function in another network-connected device, for instance a household central controller, a security camera or a household device (e.g. network connected air-conditioner, oven, heater and the like). Examples of network-connected objects include:
i. a sensor (temperature, motion, IR etc.);
ii. a controller (e.g. for home, vehicle, manufacturing, etc.); and
iii. a device or machine (e.g. home appliance, manufacturing equipment, electrical equipment, medical device, etc.).

Communication between all types of network-connected devices and, consequently, controlling of the functioning of network-connected devices is extremely simple using the NFDB approach. All of the objects use the same DB schema and APIs, and communicate and control network functions (local and remote) simply by passing and monitoring data in the local and remote storage units, according to specified local and remote function execution instructions. Examples of applications of network-connected devices which use an NFDB approach are described below.

In some implementation forms, the NFDB is used to manage data forwarding through the network. Optionally, at least some of the local and/or remote function execution instructions define, update and/or monitor forwarding rules for transferring data through the network.

Optionally, the network function of at least one network node is:
i. a network control function for controlling routing of data between at least two network nodes;
ii. a network management function of a network connecting the network nodes; and
iii. a forwarding table update function.

Optionally, the local network function and/or at least one remote network function are used for updating the network topology.

Optionally, the local network function and/or at least one remote network function are used for updating a routing table in at least one of the storage units in network node 200 and/or the remote network node storage units.

Optionally, the local network function and/or at least one remote network function are used to update states data and/or statistics data of the network nodes.

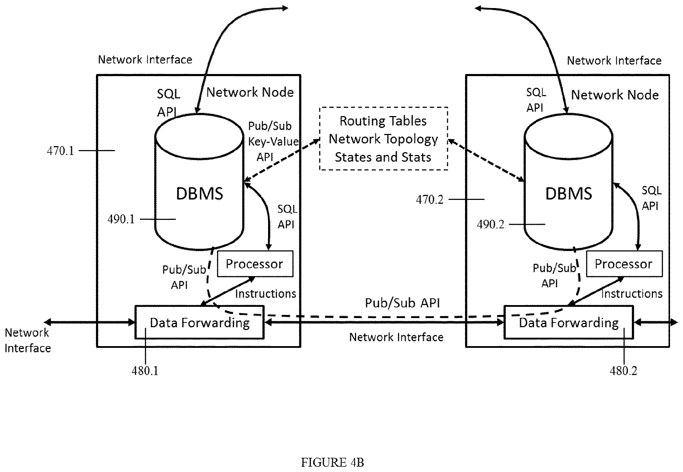

An example of NFDB-based management of data forwarding through the network is described below for Fig. 4B.

In some implementation forms, network node 200 includes network interface 290 for transmitting the remote function execution instructions to the remote network node via a network.

Optionally at least one of the network nodes is:
i. a hub;
ii. a bridge;
iii. a router;
iv. a switch;
v. a gateway;
vi. a network end point;
vii. a gateway; and
viii. a service platform.

### NFDB-based Network

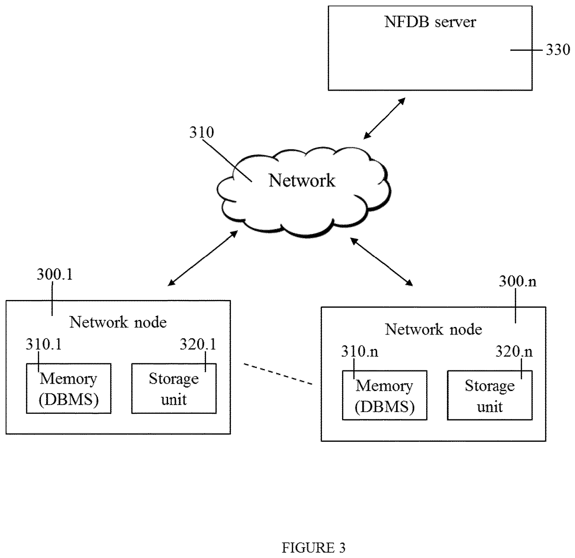

Reference is now made to Fig. 3, which is a simplified diagram of a NFDB-based network, according to implementation forms of the invention.

Network nodes 300.1-300.n communicate over network 310. The number and type of network nodes may vary based on network topology, configuration, usage and so forth. Other nodes (not shown) without NFDB capabilities may also communicate over network 310, but are not described in the context of the implementation forms of the invention.

Each network node, 310.x, includes a respective processor (not shown), memory 310.x (with a DBMS directory or reference to a DBMS directory) and storage unit 320.x. The network nodes operate substantially as described above. Different nodes may be configured according to respective implementation forms of the invention.

The network may be a fixed network or a mobile network. Implementation forms for both fixed and mobile networks may include physical nodes and/or virtual nodes operating as an NFDB-based network as described herein.

Communication within the network may use any protocol known in the art, optionally based on commonly-used data distribution and data replication mechanisms. Optionally, the communication protocol is implementation-specific. A household automation network may use a simple protocol to connect a household central controller and a limited number of household devices, whereas an NFDB-based communication network server may use a more sophisticated protocol with complex forwarding rules to transfer data through the network.

In order for network node 300.1 to induce a function in network node 300.n, network node 300.1 accesses data in storage unit 320.n over network 310, for example by sending API calls to node 300.n. Remote network function instructions in network node 300.1 determine which data elements in storage unit 320.n are accessed and what operations are performed on the accessed data elements (e.g. read and/or write operations). Data read from storage unit 320.n is returned to network node 300.1 over network 310.

NFDB server 330 communicates with all of the network nodes over network 310. NFDB server 330 may upload or download data to storage units 320.1-320.n, preload data into memories 310.1-310.n, define local and/or remote function execution instructions in the network nodes, and/or maintain forwarding tables and/or other data required for network nodes to communicate with each other. Optionally, NFDB server 330 communicates with each network node according to the node's respective protocol, which may differ for different types of network nodes.

NFDB server 330 is optionally a distributed server with multiple instances. Each instance may or may not be deployed on a virtual machine. A virtual machine may host one or more server instances. Optionally, one or more of NFDB server instances hold the data in-memory to gain maximum latency and throughput performance.

Optionally, the number of instances of the NFDB server may be scaled-out and scaled-in automatically and/or on-demand. The number of server instances and their deployment may depend on the data volume, the system load and capacity and/or other factors.

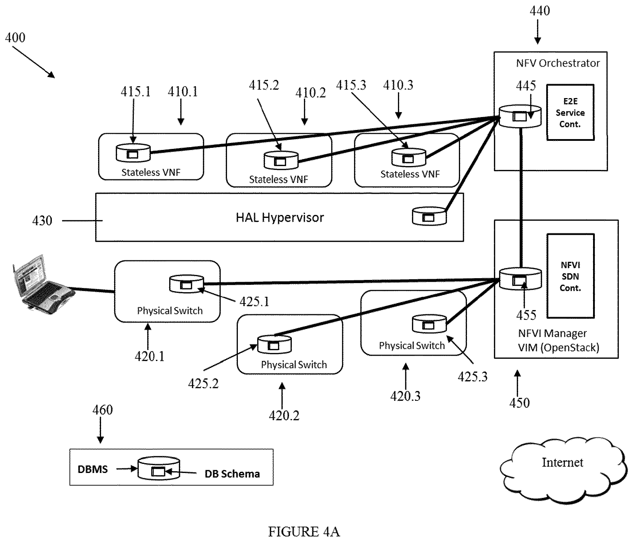

Reference is now made to Fig. 4A, which is a simplified diagram of a NFDB-based network, according to an exemplary implementation form of the invention. All network nodes [VNFs 410.1-410.3, physical switches 420.1-420.3, HW Abstraction Layer (HAL) hypervisor 430, NFV orchestrator 440 and NFVI Manager 450] have respective local storage units (415.1-415.3, 425.1-425.3, 435, 445 and 455) with uniformly accessed data. DBMS 460 ensures the data is synchronized and consistent between all the network nodes and maintains a directory indexing data elements in all of the storage units in the network nodes. The network nodes access and manipulate data elements stored in other nodes directly, by identifying the data element in the DBMS directory and accessing the identified data elements using the common access scheme.

Reference is now made to Fig. 4B, which is a simplified block diagram illustrating NFDB-based data forwarding management, according to exemplary implementation forms of the invention. Each network node communicates with other network nodes via its network interface. Network nodes 470.1 and 470.2 each have a respective copy of the DBMS (490.1 and 490.2) and maintain at least data routing tables in physical storage units 480.1 and 480.2 respectively. DBMS copies 490.1 and 490.2 are continuously updated and synchronized for forwarding instructions, and optionally for statistics, status and/or other information of interest. The updating is performed as part of the DBMS implementation, independently of the actual logic required by the network node.

The DBMS copies 490.1 and 490.2 and physical storage units 480.1 and 480.2 are accessible by Pub/Sub, Key-Value and SQL APIs.

When network node 470.1 (e.g. a controller) wants to change the way network node 470.2 (e.g. a switch) forwards data through the network, network node 470.1 accesses the routing table in storage unit 480.2 using the Pub/Sub API, and changes routing data in the routing table. The routing table serves as local network function execution instructions, which are used by the processor for forwarding data through the network.

### NFV Distributed Cache

The DBMS may manage the storage units on the network nodes together to form a distributed cache. The term "cache component" is used herein in some portions of the description to denote a local or remote storage unit in the context of a distributed cache.

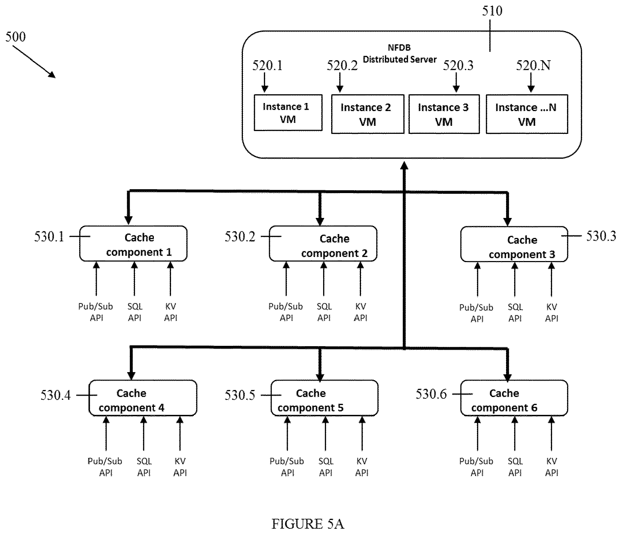

Reference is now made to Fig. 5A, which is a simplified block diagram of an NFDB distributed cache, according to a first exemplary implementation form of the invention. DB 500 includes NFDB distributed server 510 and distributed cache components 530.1-530.6 (optionally one per network function). NFDB server 510 is a distributed server which includes multiple instances (520.1-520.N).

All of cache components 530.1-530.6 employ the same DB schema. Each cache component is accessible by a Pub/Sub API, SQL API and KV API. Alternate implementation forms may include a different number of distributed caches and/or may include cache components which are accessed/controlled with different protocol and/or API functions.

Optionally, the cache component deployed for each network function is provided with a cache component as an infrastructure service which is automatically made available to the network nodes when it is activated (similar to storage or compute resources).

Optionally, the network node housing the cache component is not aware of any data synchronization that happens either between its local cache (i.e. local storage unit) and other cache components and/or between the local cache and the NFDB server. The communication between the network function and the local cache component is optionally done through shared memory using inter-process communication (IPC).

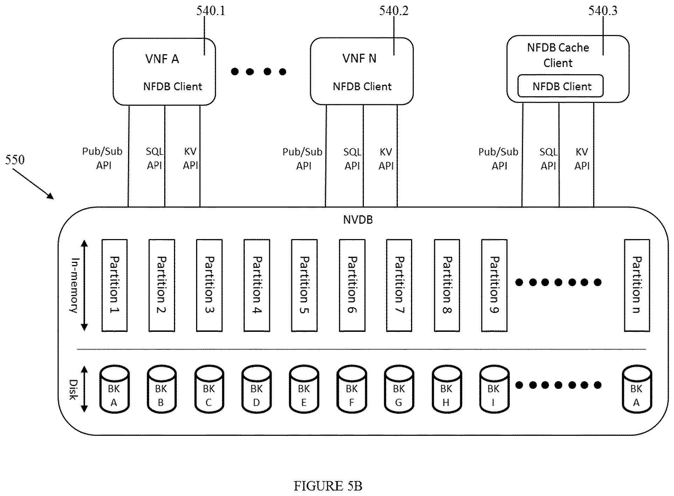

Reference is now made to Fig. 5B, which is a simplified block diagram of an NFDB distributed cache, according to a second exemplary implementation form of this invention. Fig. 5B illustrates an exemplary NFDB internal architecture, showing the interaction between network nodes 540.1-540.3 storing respective cache partitions and the central, yet distributed, DB 550. Central DB 550 consists of many individual and virtual nodes. Each node holds a respective data partition in local memory. The partition data is also continuously replicated on other DB nodes in order to provide high availability and resilience in case of node failure. Adding and removing nodes may be done automatically based on load and data volume to provide linear out and in-scalability on-demand. The partition data may also be maintained on-disk for durability and backup recovery. The interaction between the cache and central DB 550 is done using one of the three types of API, and ends up on one of the network nodes. The communication between the cache components and central DB 550 may be based on low latency network protocols in order to achieve high performance.

### Exemplary Network Node

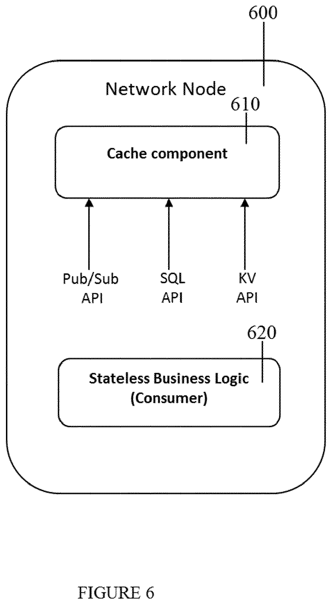

Reference is now made to Fig. 6 which is a simplified block diagram of a network node, according to exemplary implementation forms of the invention. In the exemplary implementation form, the local and remote execution instructions are implemented by stateless business logic. Implementation forms of Fig. 6 are suitable for different types of NFs (such as PNF, VNF, OVS etc.).

Network node 600 includes:
i. NFDB cache component 610 which is accessed by standard API calls; and
ii. Stateless Business Logic 620 - Includes both local and remote function execution logic to implement NF functionality, consuming and/or updating the NFDB cache component as determined by the stateless business logic.

The following APIs are used to interface between the stateless business logic 620 and cache component 610:
i. Pub/Sub API - The cache consumer (e.g. NF) may register for specific data segment changes and get notifications upon data changes on this segment. This interface is also used by the DBMS to automatically refresh the state across different distributed cache components. The Pub/Sub interface may also be used to register for initial loading of specific data segments. This is very useful for data segment preloading on start-up time.
ii. SQL API - The cache consumer may issue system queries over local and global information as part of its business logic flow
iii. Read/Write (Key-Value) API - The cache consumer may use this interface to update its local cache state as part of its business logic flow. This interface is also used by the local cache component to update the DBMS upon cache updates by the external business logic.

### Network-connected device applications

NFDB-based networking may be used with network-connected devices, to easily and efficiently provide monitoring, control and other applications in diverse fields, including home automation, production management, transportation, medical systems and the like. Each device operates as a network node with a respective storage unit. The network-connected devices utilize a uniform DB schema, and are able to identify and access data in the storage units of other devices as described above.

I) Home automation example - Home automation systems are typically used to control home lighting, heating, ventilation, air conditioning, appliances and so forth. For example, if a sensor in a room detects that the room is too cold, the household central controller may turn on a heater until the room reaches the required temperature. Using an NFDB-based network, the household central controller, sensor and heater pass the necessary information between them without knowing the other device's specific protocol.

For example, consider a household central controller which stores the temperature of each room in a separate data element in its storage unit. A sensor in a given room uses the DBMS directory to locate the data element which stores temperature data for its room in the household central controller's storage unit. The sensor periodically updates the temperature value stored in the household central controller's storage unit at the data element's address using standard API tools. Remote network function execution instructions in the sensor may specify factors such as how the temperature should be formatted, how frequently the temperature should be updated at the household central controller, any other data that should be supplied, etc.

The household central controller monitors the temperature level in the room by periodically accessing its local storage unit to read the value of the data element storing data received from the sensor. No further communication with the sensor is needed. When the household central controller wants to turn on the heater in a given room, the household central controller uses the DBMS directory to locate the address of an On/Off data element in the heater. The household central controller may then use the Read/Write (Key-Value) API to set the On/Off data element in the heater's storage unit to ON (i.e. logic level "1"). The heater periodically checks its On/Off data element and turns on the heat when the data element is ON. Similarly, to turn off the heater the household central controller sets the data element to OFF (i.e. logic level "0"), causing the heater to turn off the heat next time it checks the value of the On/Off data element.

The household central controller may similarly control its own functioning by monitoring and updating data in its local storage unit according to local network function execution instructions. For example, after instructing the heater to turn on the local network function execution instructions may instruct the household central controller to change the value of a monitoring frequency data element in its local storage unit in order to increase the frequency that the household central controller checks the temperature of the room being heated. The household central controller may then react quickly to temperature changes in the room and turn off the heater as soon as the room reaches the desired temperature, thereby maintaining the room within a narrow temperature range.

II) Manufacturing example - Manufacturing equipment, production central controller, sensors and other devices in a manufacturing facility may each serve as a network node and communicate with each other over a local NFDB-based network. A production machine, for example, may continually update date elements in the storage unit of the production central controller, allowing the production central controller to monitor throughput and machine functioning by accessing data in its local storage unit. Local network function execution instructions in the production central controller may be used to control what machine functions are monitored by the production central controller and in what sequence. The production central controller may also control the type of goods being manufactured by writing the desired type and quantity of the goods into data elements in its local storage unit. The production machines read the production requirement from the production central controller's storage unit using the standard schema, recalibrate and adjust production as required.

In another example, a heat sensor may turn off a machine when it senses a high temperature by changing the machine On/Off data element directly, without going through the central production central controller.

### Method for Managing Communication

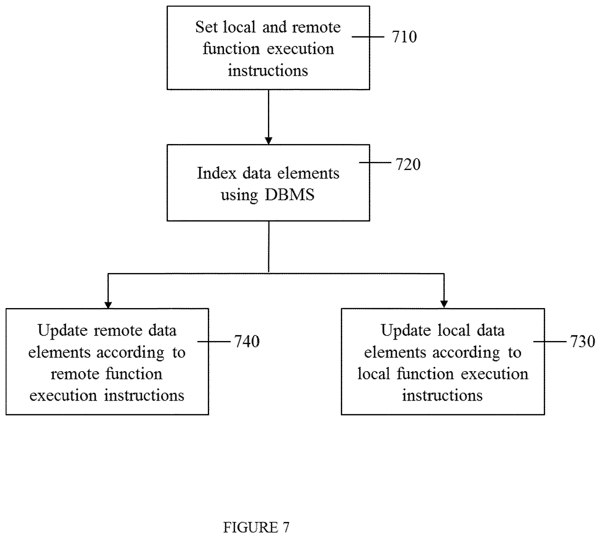

Reference is now made to Fig. 7, which is a simplified flowchart of a method of managing communication between network nodes, according to implementation forms of the invention. The network connects between network nodes and incorporates an NVFDB substantially as described above. For clarity the method is described for two nodes, however a person of skill in the art will appreciate that implementation forms of the method may be expanded to manage communications in a large network comprising significantly more than two network nodes.

In 710, local network function execution instructions and remote function execution instructions are set at a network node.

In 720, a DBMS directory indexes data elements stored in the physical storage units of both network nodes. The index identifies data elements stored in both physical storage units, so that the network node may locate data elements in both its local storage and the remote storage unit on the remote network node.

To induce a local network function, in 730 the network node updates one or more local data elements in its local storage unit according to the local network function execution instructions.

To induce a remote network function, in 740 the network node updates one or more data elements in the remote node storage unit according to the remote network function execution instructions. The data stored in the remote node storage unit is accessed by the network node directly, using the common DB schema.

### Network function control

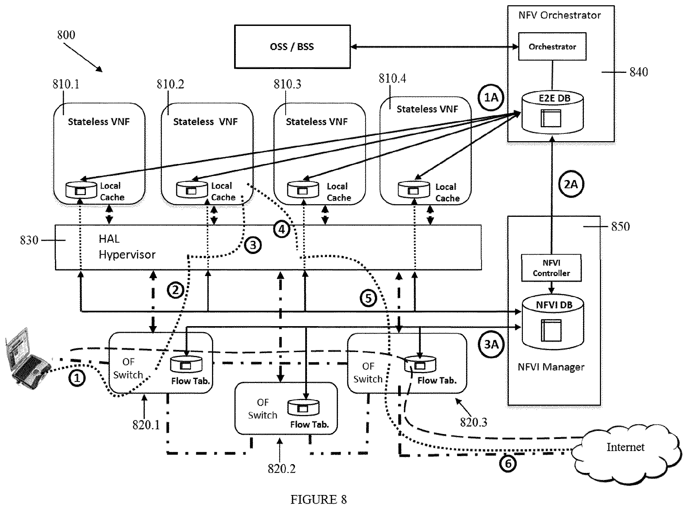

Reference is now made to Fig. 8, which is a simplified block diagram illustrating network function control in an NFDB-based network, according to exemplary implementation forms of the invention. NFDB network 800 is structured similarly to the NFDB network of Fig. 4, with multiple VNF nodes (810.1-810.4), physical nodes (e.g. OpenFlow switches 820.1-820.3), HAL 830, and NFV Orchestrator 840 and NFVI manager 850.

Fig. 8 depicts new flow configuration in an NFV implementation using a distributed DB in accordance with exemplary implementation forms of the current invention. The new flow configuration shown in Fig. 8 is a non-limiting exemplary scheme; other schemes are possible.

The data path flow is illustrated by 1-6 (dotted lines), and proceeds as follows:
1) A first packet of a flow is received by OpenFlow (OF) switch 820.1;
2) The packet is sent to a specified port for unknown flows and to the OVS in HAL 830;
3) The packet is sent to a stateless VNF (e.g. 810.2) dedicated for handling flows. The VNF loads looks up the flow information in the central DB.
4) The packet is sent to the OVS in HAL 830 on the egress path;
5) The packet is sent to the egress OF switch 820.3; and
6) The packet is sent by OF switch 820.3 to the destination port.

Database mechanisms for information update are illustrated by 1A-3A (solid lines).
1A) Flow information is read by the stateless VNFs from the E2E (End to End) DB for the received flow. The DB is updated by the VNF with new flow information if needed;
2A) Flow information is processed and updates the NFVI (NFV Infrastructure) DB; and
3A) Flow information is processed and updates the DB implemented in the NFVI switches (Physical OF Switches and OVS in HAL 830).

Once the new flow is established, the OF Switches DB is updated with the flow information. The flow may then be handled completely by the NFVI network (OF switches), as illustrated by the dashed line in Fig. 8.

### Open Daylight (ODL) Implementation

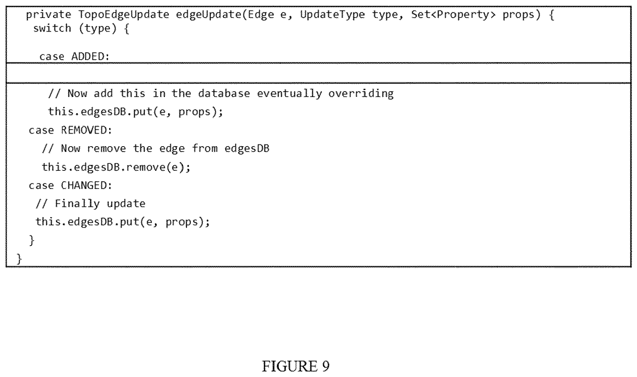

Reference is now made to Fig. 9, which shows an example of NFDB interaction with an ODL SDN controller for data insert/update/delete of Network Topology Edges Table. NFDB exposes similar Read/Write (Key-Value) API that may be used in similar way without changing the current interaction model.

Fig. 9 demonstrates a specific usage of network topology change for updating the network edge of graphs, however the key-value API utilized in NFDB is generic and may be used to manipulate other data content.

The NFDB-based network eliminates the need to redefine and enhance network protocols continually when new types of network elements or protocols are added to the network. Updating the common DB schema integrates the new protocols over the entire network, making network elements using new protocols immediately accessible to other network elements. This significantly simplifies VNF and PNF implementation. NFs may be automatically synced. Separating data from business logic may make the network functions stateless, allowing them to be scaled, moved and recovered from failure much faster than commonly used stateful implementations. Other advantages include schema evolution to upgrade the data model without service interruption, persistency, geo-site replication for disaster recovery, state recovery if NF fails and easy repartitioning for network growth/shrinkage.

The methods as described above are used in the fabrication of integrated circuit chips.

The flowchart and block diagrams in the Figures illustrate the architecture, functionality, and operation of possible implementations of systems, methods and computer program products according to various implementation forms of the present invention. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

The descriptions of the various implementation forms of the present invention have been presented for purposes of illustration, but are not intended to be exhaustive or limited to the implementation forms disclosed. The terminology used herein was chosen to best explain the principles of the implementation forms, the practical application or technical improvement over technologies found in the marketplace, or to enable others of ordinary skill in the art to understand the implementation forms disclosed herein.

It is expected that during the life of a patent maturing from this application many relevant network architectures, network functions, network function virtualization, network nodes, virtual network functions, physical network functions, network protocols, databases, database management systems, database schemas, servers, distributed servers, server instances, storage units, distributed caches and cache components will be developed and the scope of the term network, network function, network function virtualization, network node, virtual network function, physical network function, network protocols, database, database management system, database schema, server, distributed server, server instance, storage unit, distributed cache and cache component is intended to include all such new technologies a priori.

The terms "comprises", "comprising", "includes", "including", "having" and their conjugates mean "including but not limited to". This term encompasses the terms "consisting of' and "consisting essentially of'.

The phrase "consisting essentially of' means that the composition or method may include additional ingredients and/or steps, but only if the additional ingredients and/or steps do not materially alter the basic and novel characteristics of the claimed composition or method.

As used herein, the singular form "a", "an" and "the" include plural references unless the context clearly dictates otherwise. For example, the term "a compound" or "at least one compound" may include a plurality of compounds, including mixtures thereof.

The word "exemplary" is used herein to mean "serving as an example, instance or illustration". Any implementation form described as "exemplary" is not necessarily to be construed as preferred or advantageous over other implementation forms and/or to exclude the incorporation of features from other implementation forms.

The word "optionally" is used herein to mean "is provided in some implementation forms and not provided in other implementation forms". Any particular implementation form of the invention may include a plurality of "optional" features unless such features conflict.

Throughout this application, various implementation forms of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals there between.

It is appreciated that certain features of the invention, which are, for clarity, described in the context of separate implementation forms, may also be provided in combination in a single implementation form. Conversely, various features of the invention, which are, for brevity, described in the context of a single implementation form, may also be provided separately or in any suitable subcombination or as suitable in any other described implementation form of the invention. Certain features described in the context of various implementation forms are not to be considered essential features of those implementation forms, unless the implementation form is inoperative without those elements.

Although the invention has been described in conjunction with specific implementation forms thereof, it is evident that many alternatives, modifications and variations will be apparent to those skilled in the art.

## Claims

1. A method of managing communication between network nodes (300.1,...300.n) in a network (310), comprising:
identifying, using a database management system, DBMS, directory, a local data element from a plurality of data elements stored in a plurality of physical storage units associated with a plurality of network nodes, wherein the local data element is stored in a local physical storage unit associated with a first network node of said plurality of network nodes, and the DBMS directory indexes the plurality of data elements;
identifying, using said DBMS directory, a remote data element from said plurality of data elements, wherein the remote data element is stored in a remote physical storage unit associated with a second network node of said plurality of network nodes;
instructing the updating of said remote data element according to remote function execution instructions, wherein the remote function execution instructions cause a remote network function to be executed by said second network node; and
instructing the updating of said local data element according to local network function execution instructions, wherein the local network function execution instructions cause a local network function to be executed by a component of said first network node.

2. The method of claim 1, wherein a single access schema is used to load, query or update data stored in said local physical storage unit and said remote physical storage unit.

3. The method of claim 1 or 2, wherein said local network function execution instructions and said remote network function execution instructions indicate which data elements are to be updated in order to perform a desired network function, and which values are to be written and/or read.

4. The method of any one of claims 1 to 3, wherein at least one of said local network function and said remote network function is a network control function for controlling routing of data between at least two network nodes of said plurality of network nodes.

5. The method of any one of claims 1 to 3, wherein at least one of said local network function and said remote network function is a network management function of a network connecting said plurality of network nodes.

6. The method of any of the preceding claims, further comprising transmitting, by said first network node, said remote function execution instructions to said second network node via a network.

7. The method of any of the preceding claims, wherein at least one of said local network function and said remote network function is used for updating a network topology of said plurality of network nodes.

8. The method of claim 7, wherein at least one of said local network function and said remote network function is used for updating a routing table in at least one of said plurality of physical storage units.

9. The method of any of the preceding claims, wherein at least one of said local network function execution instructions and said remote network function execution instructions is an application program interface, API, call.

10. The method of claim 9, wherein said API call comprises a Pub/Sub API call for registering changes and getting notifications upon data changes on at least one of said plurality of data elements.

11. The method of claim 9, wherein said API call comprises a Structured Query Language, SQL, API call for querying local and global information in at least some of said plurality of data elements.

12. The method of claim 9, wherein said API call comprises a plurality of Read/Write Key-Value API calls for updating a state stored in at least one of said plurality of data elements as part of a business logic flow.

13. A computer program product, comprising computer readable program instructions stored thereon, which, when executed by a processor, cause the processor to carry out the method of any one of claims 1 to 12.

14. A network function database, NFDB, -based network (310), comprising a NFDB server (330) and a plurality of network nodes (300.1,...300.n), wherein at least one network node of the plurality of network nodes is configured to perform the method of any one of claims 1 to 12.

15. The NFDB-based network of claim 14, wherein the NFDB server (330) is a distributed server with multiple instances, wherein each of the multiple instances is deployed on a virtual machine.

## Patentansprüche

1. Verfahren zum Verwalten der Kommunikation zwischen Netzknoten (300.1,... 300.n) in einem Netzwerk (310), umfassend:
Identifizieren, unter Verwendung eines Datenbankmanagementsystem(DBMS)-Verzeichnisses, eines lokalen Datenelements von mehreren Datenelementen, die in mehreren physischen Datenspeichereinheiten gespeichert sind, welche mit mehreren Netzknoten verknüpft sind, wobei das lokale Datenelement in einer lokalen physischen Datenspeichereinheit gespeichert ist, die mit einem ersten Netzknoten der mehreren Netzknoten verknüpft ist, und das DBMS-Verzeichnis die mehreren Datenelemente indiziert;
Identifizieren, unter Verwendung des DBMS-Verzeichnisses, eines entfernten Datenelements von den mehreren Datenelementen, wobei das entfernte Datenelement in einer entfernten physischen Datenspeichereinheit gespeichert ist, die mit einem zweiten Netzknoten der mehreren Netzknoten verknüpft ist;
Anweisen des Aktualisierens des entfernten Datenelements gemäß entfernten Funktionsausführungsanweisungen, wobei die entfernten Funktionsausführungsanweisungen bewirken, dass eine entfernte Netzfunktion von dem zweiten Netzknoten ausgeführt wird; und
Anweisen des Aktualisierens des lokalen Datenelements gemäß lokalen Netzfunktionsausführungsanweisungen, wobei die lokalen Netzfunktionsausführungsanweisungen bewirken, dass eine lokale Netzfunktion von einer Komponente des ersten Netzknotens ausgeführt wird.

2. Verfahren nach Anspruch 1, wobei ein Einzelzugangsschema verwendet wird, um Daten, die in der lokalen physischen Datenspeichereinheit und der entfernten physischen Datenspeichereinheit gespeichert sind, zu laden, abzufragen oder zu aktualisieren.

3. Verfahren nach Anspruch 1 oder 2, wobei die lokalen Netzfunktionsausführungsanweisungen und die entfernten Netzfunktionsausführungsanweisungen angeben, welche Datenelemente aktualisiert werden sollen, um eine gewünschte Netzfunktion durchzuführen, und welche Werte geschrieben und/oder gelesen werden sollen.

4. Verfahren nach einem der Ansprüche 1 bis 3, wobei wenigstens eines von der lokalen Netzfunktion und der entfernten Netzfunktion eine Netzsteuerungsfunktion zum Steuern der Datenweiterleitung zwischen wenigstens zwei Netzknoten der mehreren Netzknoten ist.

5. Verfahren nach einem der Ansprüche 1 bis 3, wobei wenigstens eines von der lokalen Netzfunktion und der entfernten Netzfunktion eine Netzverwaltungsfunktion eines Netzwerks ist, das die mehreren Netzknoten verbindet.

6. Verfahren nach einem der vorstehenden Ansprüche, ferner umfassend das Übertragen, durch den ersten Netzknoten, der entfernten Funktionsausführungsanweisungen an den zweiten Netzknoten über ein Netzwerk.

7. Verfahren nach einem der vorstehenden Ansprüche, wobei wenigstens eines von der lokalen Netzfunktion und der entfernten Netzfunktion zum Aktualisieren einer Netztopologie der mehreren Netzknoten verwendet wird.

8. Verfahren nach Anspruch 7, wobei wenigstens eines von der lokalen Netzfunktion und der entfernten Netzfunktion zum Aktualisieren einer Routingtabelle in wenigstens einer der mehreren physischen Datenspeichereinheiten verwendet wird.

9. Verfahren nach einem der vorstehenden Ansprüche, wobei wenigstens eines der lokalen Netzfunktionsausführungsanweisungen und der entfernten Netzfunktionsausführungsanweisungen ein Aufruf einer Anwendungsprogrammierschnittstelle, API, ist.

10. Verfahren nach Anspruch 9, wobei der API-Aufruf einen "Pub/Sub"-API-Aufruf zum Registrieren von Änderungen und Erhalten von Benachrichtigungen bei Datenänderungen in wenigstens einem der mehreren Datenelemente umfasst.

11. Verfahren nach Anspruch 9, wobei der API-Aufruf einen SQL(Structured Query Language)-API-Aufruf zum Abfragen von lokalen und globalen Informationen in wenigstens einigen der mehreren Datenelemente umfasst.

12. Verfahren nach Anspruch 9, wobei der API-Aufruf mehrere Lesen/Schreiben-Schlüsselwert-API-Aufrufe zum Aktualisieren eines Zustands umfasst, der in wenigstens einem der mehreren Datenelemente als Teil eines Geschäftslogikflusses gespeichert ist.

13. Computerprogrammprodukt, umfassend darauf gespeicherte computerlesbare Programmanweisungen, die, wenn sie von einem Prozessor ausgeführt werden, den Prozessor veranlassen, das Verfahren nach einem der Ansprüche 1 bis 12 auszuführen.

14. Auf einer Netzfunktionsdatenbank, NFDB, basierendes Netzwerk (310), umfassend einen NFDB-Server (330) und mehrere Netzknoten (300.1,...300.n), wobei wenigstens ein Netzknoten der mehreren Netzknoten dafür ausgelegt ist, das Verfahren nach einem der Ansprüche 1 bis 12 durchzuführen.

15. NFDB-basiertes Netzwerk nach Anspruch 14, wobei der NFDB-Server (330) ein verteilter Server mit mehreren Instanzen ist, wobei jede der mehreren Instanzen auf einer virtuellen Maschine implementiert ist.

## Revendications

1. Procédé de gestion de la communication entre des nœuds de réseau (300.1, ... 300.n) dans un réseau (310), comprenant :
l'identification, en utilisant un répertoire de système de gestion de base de données, DBMS, d'un élément de données local parmi une pluralité d'éléments de données stockés dans une pluralité d'unités de stockage physiques associées à une pluralité de nœuds de réseau, l'élément de données local étant stocké dans une unité de stockage physique locale associée à un premier nœud de réseau de ladite pluralité de nœuds de réseau, et le répertoire DBMS indexant la pluralité d'éléments de données ;
l'identification, en utilisant ledit répertoire DBMS, d'un élément de données distant parmi ladite pluralité d'éléments de données, l'élément de données distant étant stocké dans une unité de stockage physique distante associée à un deuxième nœud de réseau de ladite pluralité de nœuds de réseau ;
la demande de la mise à jour dudit élément de données distant conformément à des instructions d'exécution de fonction distante, les instructions d'exécution de fonction distante faisant en sorte qu'une fonction de réseau distant soit exécutée par ledit deuxième nœud de réseau ; et
la demande de la mise à jour dudit élément de données local conformément à des instructions d'exécution de fonction de réseau local, les instructions d'exécution de fonction de réseau local faisant en sorte qu'une fonction de réseau local soit exécutée par un composant dudit premier nœud de réseau.

2. Procédé selon la revendication 1, dans lequel un seul schéma d'accès est utilisé pour charger, interroger ou mettre à jour des données stockées dans ladite unité de stockage physique locale et ladite unité de stockage physique distante.

3. Procédé selon la revendication 1 ou 2, dans lequel lesdites instructions d'exécution de fonction de réseau local et lesdites instructions d'exécution de fonction de réseau distant indiquent quels éléments de données doivent être mis à jour afin d'exécuter une fonction de réseau désirée, et quelles valeurs doivent être écrites et/ou lues.

4. Procédé selon l'une quelconque des revendications 1 à 3, dans lequel au moins soit ladite fonction de réseau local, soit ladite fonction de réseau distant est une fonction de commande de réseau pour commander l'acheminement de données entre au moins deux nœuds de réseau de ladite pluralité de nœuds de réseau.

5. Procédé selon l'une quelconque des revendications 1 à 3, dans lequel au moins soit ladite fonction de réseau local, soit ladite fonction de réseau distant est une fonction de gestion de réseau d'un réseau connectant ladite pluralité de nœuds de réseau.

6. Procédé selon l'une quelconque des revendications précédentes, comprenant en outre la transmission, par ledit premier nœud de réseau, desdites instructions d'exécution de fonction distante audit deuxième nœud de réseau via un réseau.

7. Procédé selon l'une quelconque des revendications précédentes, dans lequel au moins soit ladite fonction de réseau local, soit ladite fonction de réseau distant est utilisée pour mettre à jour une topologie de réseau de ladite pluralité de nœuds de réseau.

8. Procédé selon la revendication 7, dans lequel au moins soit ladite fonction de réseau local, soit ladite fonction de réseau distant est utilisée pour mettre à jour une table d'acheminement dans au moins une de ladite pluralité d'unités de stockage physiques.

9. Procédé selon l'une quelconque des revendications précédentes, dans lequel au moins soit lesdites instructions d'exécution de fonction de réseau local, soit lesdites instructions d'exécution de fonction de réseau distant sont un appel d'interface de programmation d'applications, API.

10. Procédé selon la revendication 9, dans lequel l'appel API consiste en un appel API Pub/Sub pour enregistrer des changements et obtenir des notifications lors de changements de données sur au moins un de ladite pluralité d'éléments de données.

11. Procédé selon la revendication 9, dans lequel l'appel API consiste en un appel API en langage SQL pour interroger des informations locales et globales dans au moins quelques-uns de ladite pluralité d'éléments de données.

12. Procédé selon la revendication 9, dans lequel l'appel API consiste en une pluralité d'appels API Read/Write Key-Value pour mettre à jour un état stocké dans au moins un de ladite pluralité d'éléments de données comme faisant partie d'un flux de logique commerciale.

13. Produit de programme informatique, comprenant des instructions de programme lisibles par ordinateur stockés sur celui-ci, qui, lorsqu'elles sont exécutées par un processeur, font exécuter au processeur le procédé selon l'une quelconque des revendications 1 à 12.

14. Réseau basé sur une base de données de fonctions de réseau, NFDB (310), comprenant un serveur NFDB (330) et une pluralité de nœuds de réseau (300.1, ... 300.n), au moins un nœud de réseau de la pluralité de nœuds de réseau étant configuré de façon à exécuter le réseau selon l'une quelconque des revendications 1 à 12.

15. Réseau basé sur une base de données NFDB selon la revendication 14, dans lequel le serveur NFDB (330) est un serveur réparti avec des instances multiples, chacune des instances multiples étant déployée sur une machine virtuelle.
